# FASCICULE DE BREVET EUROPEEN

(11) **EP 0 529 684 B1**
(45) Date de publication et mention de la délivrance du brevet: **17.01.1996**
(21) Numéro de dépôt: 92116640.1
(22) Date de dépôt: 04.03.1988
(51) Int. Cl.: A01B 33/02, A01B 9/00

(54) **Machine de travail du sol avec organe de stabilisation perfectionné**
Bodenbearbeitungsmaschine mit verbessertem Stabilisierungsorgan
Agricultural soil working machine with improved stabilization element

(30) Priorité: 06.03.1987 FR 8703219
(43) Date de publication de la demande: 03.03.1993
(62) Demande divisionnaire de: 88440013.6
(73) Titulaire: KUHN S.A., F-67700 Saverne (FR)
(72) Inventeur: Kirch, Michel, F-57430 Sarralbe (FR)

(56) Documents cités:
- EP-A- 0 162 197
- EP-A- 0 188 633
- GB-A- 1 192 699

## Description

La présente invention concerne une machine agricole de travail du sol comportant une structure d'attelage, un châssis lié à ladite structure d'attelage, un rotor supporté par ledit châssis et dont l'axe longitudinal s'étend obliquement par rapport à la direction d'avance au travail, ledit rotor étant muni d'outils de travail du sol et étant entraîné positivement par une source motrice autour de son axe longitudinal, de telle sorte qu'à sa partie frontale, les outils de travail du sol se déplacent vers le sol, et un organe de stabilisation latérale lié au châssis par une structure porteuse, de manière à pouvoir être déplacé en hauteur par rapport audit châssis grâce à un organe de réglage.

On connaît une telle machine (EP-A-0 162 197) dont les outils de travail du sol comportent un disque bombé ayant une forme de calotte sphérique dont le bord est circulaire ou crénelé et dont la concavité est dirigée vers l'extrémité du rotor la plus en avant, compte tenu du sens de travail de la machine.

Cette machine connue comporte, derrière l'extrémité latérale du châssis la plus en arrière, un organe de stabilisation latérale réalisé sous forme d'un disque incliné dont la profondeur de travail est réglable.

Le disque de stabilisation de cette machine connue ne devrait permettre qu'une stabilisation latérale limitée, car la surface portante du disque est relativement faible. Ceci devrait d'ailleurs, dans certaines conditions, conduire à une déformation du disque, lorsque la composante latérale engendrée par les outils de travail du sol devient très importante. Du reste, il n'est pas possible de faire varier le degré de stabilisation latérale pendant le travail lorsqu'à certains endroits du champ, le sol est plus dur.

Le but de la présente invention est d'améliorer la stabilisation latérale d'une telle machine de travail du sol.

Ce but a été atteint en dotant une machine agricole de travail du sol du type comportant :
- une structure d'attelage,
- un châssis lié à ladite structure d'attelage,
- un rotor supporté par ledit châssis et dont l'axe longitudinal s'étend obliquement par rapport à la direction d'avance au travail, ledit rotor étant muni d'outils de travail du sol et étant entraîné positivement par une source motrice autour de son axe longitudinal, de telle sorte qu'à sa partie frontale, les outils de travail du sol se déplacent vers le sol, et
- un organe de stabilisation latérale lié au châssis par une structure porteuse, de manière à pouvoir être déplacé en hauteur par rapport audit châssis grâce à un organe de réglage
des caractéristiques suivantes :
(a) l'organe de stabilisation latérale comporte un soc,
(b) la structure porteuse comprend un quadrilatère déformable ayant au moins sensiblement la forme d'un parallélogramme, et
(c) l'organe de réglage permettant de déterminer la profondeur de travail du soc, est constitué par au moins un vérin hydraulique.

Grâce au fait que l'organe de stabilisation latérale comporte un soc, on obtient une très bonne stabilisation latérale en faisant pénétrer le soc dans le sol à la profondeur nécessaire. Du fait que la structure porteuse comprend un quadrilatère déformable ayant au moins sensiblement la forme d'un parallélogramme, on évite, durant le réglage de la profondeur de travail du soc, que celui-ci ne talonne sur le sous-sol ou au contraire ne prenne un angle de piquage trop important.

Grâce à l'utilisation d'au moins un vérin hydraulique pour déformer le quadrilatère déformable en vue du réglage de la profondeur de travail du soc, l'utilisateur peut, à partir de la cabine du tracteur, par action sur des éléments de commande liés au vérin hydraulique, conserver de manière optimale le cap de la machine. L'utilisateur peut, en effet, intensifier à volonté l'action de l'organe de stabilisation latérale s'il se produit une déviation latérale de la machine pendant le travail due, par exemple, à un changement local de la configuration du sol que travaille la machine.

Selon une caractéristique supplémentaire de l'invention, le soc de stabilisation latérale pourra être équipé d'un dispositif à déclenchement permettant au soc de se dégager du sol lorsqu'il rencontre un obstacle enfoui dans ledit sol, tel qu'une roche par exemple (revendication 2).

Avantageusement, ce dispositif à déclenchement pourra être intégré dans les éléments de commande liés au vérin hydraulique agissant sur le quadrilatère déformable (revendication 3).

Selon une autre caractéristique supplémentaire de l'invention, le pouvoir de stabilisation du soc pourra encore être augmenté en munissant l'arrière de la partie inférieure du soc d'une plaque augmentant la portance latérale du soc (revendication 4).

Selon une autre caractéristique supplémentaire de l'invention, la structure porteuse du soc de stabilisation latérale est liée de façon articulée au châssis par l'intermédiaire d'une articulation d'axe dirigé vers le haut et est maintenue dans une position choisie par rapport au châssis par un organe de maintien réglable (revendication 5).

Cette disposition permet de régler de manière optimale la position du soc de stabilisation latérale et de replier ce dernier vers l'intérieur de la machine pendant le transport en vue de diminuer la largeur de transport de la machine.

Selon une autre caractéristique supplémentaire de l'invention, le soc de stabilisation latérale s'étend dans le voisinage arrière de l'extrémité du rotor la plus en arrière, compte tenu du sens de travail (revendication 6).

Avantageusement, le soc de stabilisation latérale pourra s'étendre dans le sillage de l'outil de travail du sol implanté à ladite extrémité du rotor la plus en arrière, compte tenu du sens de travail (revendication 7).

Selon une autre caractéristique supplémentaire de l'invention, chaque outil de travail du sol présente une concavité dirigée vers l'extrémité du rotor la plus en avant, compte tenu du sens de travail de la machine (revendication 8).

L'invention sera parfaitement comprise grâce à la description suivante d'un exemple non limitatif de réalisation d'une machine agricole de travail du sol selon l'invention. Cette description fait référence au dessin annexé sur lequel :
- la figure 1 représente, en vue de dessus, un exemple de réalisation d'une machine selon l'invention attelée à un tracteur ;
- la figure 2 représente, vue en perspective trois quarts avant, l'extrémité gauche de la machine de la figure 1.

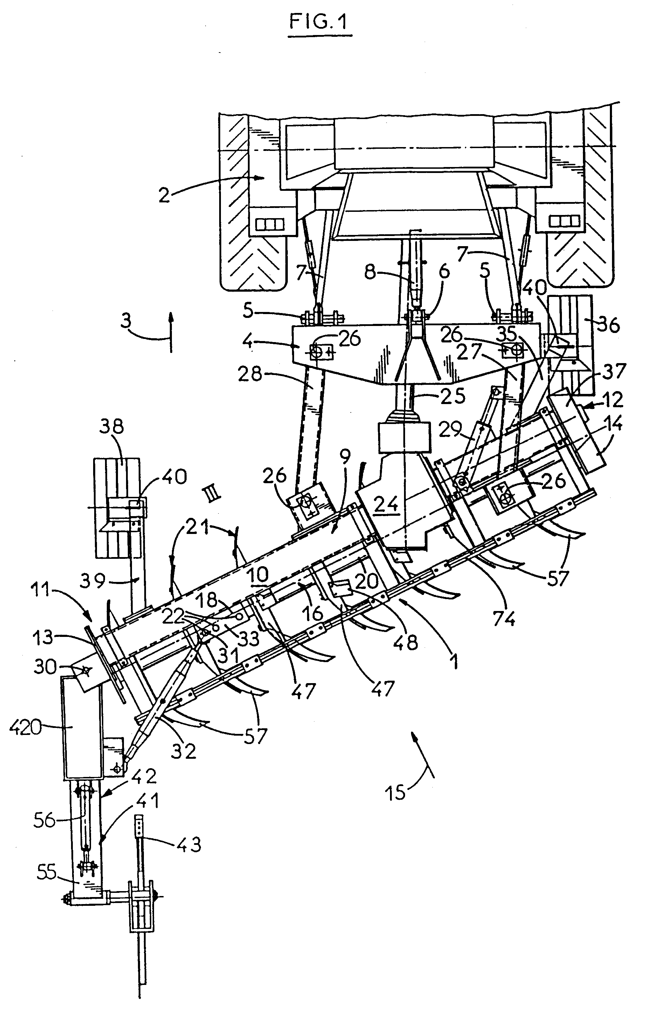

Sur la figure 1, la machine agricole de travail du sol (1) selon l'invention est attelée à un tracteur agricole (2) qui tire celle-ci dans le sens et la direction de travail (3).

A cet effet, la machine (1) est munie d'une structure d'attelage (4) qui comporte deux points d'attelage inférieurs (5) et un point d'attelage supérieur (6). Ces points d'attelage (5, 6) sont accouplés respectivement aux bras inférieurs (7) et à la bielle de poussée (8) du mécanisme d'attelage à trois points du tracteur (2).

La partie arrière de la structure d'attelage (4) est liée au châssis (9) de la machine (1). Le châssis (9) est composé d'une traverse supérieure (10) qui comporte à chacune de ses extrémités (11, 12) une paroi latérale (13, 14) s'étendant vers le bas. Vu suivant la flèche (15), le châssis (9) a une forme de U renversé. Vu de dessus, le châssis (9) s'étend obliquement par rapport à la direction de travail (3), de telle sorte que son extrémité droite (12) soit située plus en avant que son extrémité gauche (11).

Entre les extrémités inférieures des parois latérales (13, 14) est implanté un rotor (16) qui s'étend parallèlement au châssis (9), c'est-à-dire que - vu de l'arrière dans le sens de travail (3) - l'extrémité droite du rotor (16) est située plus en avant que son extrémité gauche.

Le rotor (16) comporte une poutre centrale (20) sur laquelle sont fixés des outils de travail du sol (21). Ces outils de travail du sol (21) sont chacun constitué d'un disque bombé (47), dont la concavité est dirigée vers l'extrémité droite (12) du rotor (16), qui s'étend la plus en avant, compte tenu du sens de travail (3), et de bêches (48) implantées à la périphérie dudit disque bombé (47).

Pendant le travail, le rotor (16) est entraîné positivement en rotation autour de son axe longitudinal (18), de telle sorte qu'à sa partie frontale, les bêches (48) des outils de travail du sol (21) se déplacent vers le sol. A cet effet, le châssis (9) comporte sensiblement au niveau du plan longitudinal de symétrie du tracteur (2), un carter de renvoi (24) qui est réalisé sous forme de boîte de vitesses. Ce carter de renvoi (24) reçoit le mouvement de l'arbre de prise de force (non représenté) du tracteur (2) par l'intermédiaire d'un arbre de transmission à joints universels (25).

Le carter de renvoi (24) est, par ailleurs, lié mécaniquement avec un carter latéral (37) situé à l'extrémité droite (12) du châssis (9) et qui forme la paroi latérale (14). Le carter de renvoi (24) transmet ainsi au carter latéral (37) le mouvement rotatif reçu du tracteur (2). Ce carter latéral (37) transmet ensuite le mouvement au rotor (16) d'une façon connue de l'homme de l'art.

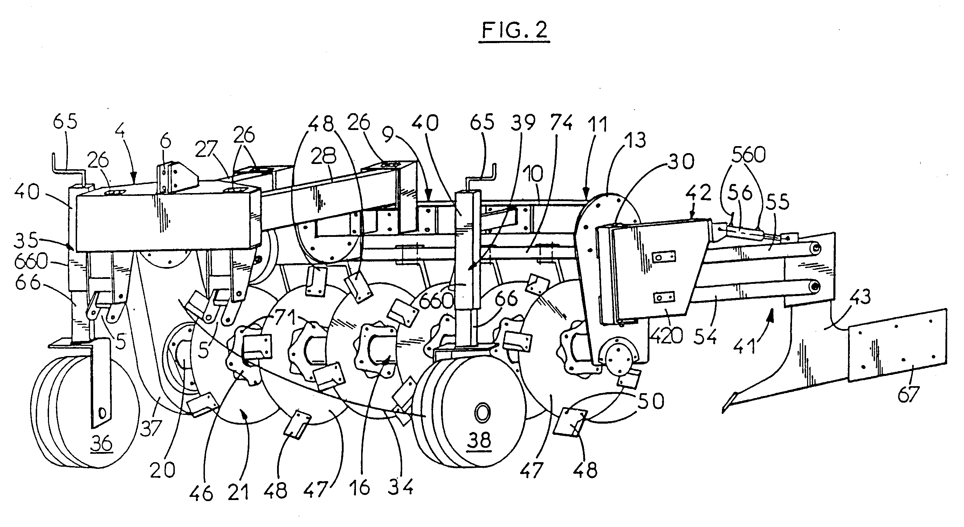

On voit encore qu'à l'avant de ses extrémités (11, 12), le châssis (9) est muni de deux roues de soutènement (36, 38) qui roulent sur le sol pendant le travail. Ces roues de soutènement (36, 38) sont liées au châssis (9) au moyen de structures de support (35, 39) constituées de telle sorte que l'on puisse modifier verticalement les positions des roues (36, 38) par rapport au châssis (9) grâce à un mécanisme de réglage (40) qui est représenté plus en détail sur la figure 2.

La roue (36), située à l'extrémité droite (12) du châssis (9), s'étend devant le carter latéral (37). Durant le travail, cette roue (36) roule dans la raie.

A l'arrière de l'extrémité gauche (11) du châssis (9) est également lié un organe de stabilisation latérale (41). Cet organe de stabilisation latérale (41) est lié au châssis (9) au moyen d'une structure support (42) qui est également vue plus en détail sur la figure 2.

L'organe de stabilisation latérale (41) comporte un soc (43) qui s'engage dans le sol pendant le travail dans le sillage de l'outil de travail du sol (21) implanté à l'extrémité correspondante du rotor (16). A l'arrière, le soc (43) est muni d'une plaque (67) lui conférant un bon pouvoir de stabilisation.

Ledit organe de stabilisation latérale (41) absorbe l'effort transversal qui s'exerce sur le rotor (16) pendant le travail et qui est engendré par l'inclinaison dudit rotor (16).

A l'arrière de la traverse supérieure (10) du châssis (9) est fixée une poutre (74) sur laquelle sont fixés des décrotteurs-versoirs (57) associés chacun à un outil de travail du sol (21).

On remarque également sur la figure 1 que la liaison entre la structure d'attelage (4) et le châssis (9) est réalisée à l'aide de deux bielles (27, 28).

Ces deux bielles (27, 28) sont toutes les deux montées de façon articulée d'une part sur la structure d'attelage (4) et d'autre part sur la traverse (10) du châssis (9) par l'intermédiaire d'articulations (26) d'axe dirigé vers le haut. Un vérin hydraulique (29) implanté entre la bielle (27) et la traverse (10) du châssis (9), permet de manoeuvrer le quadrilatère déformable formé par lesdites bielles (27, 28) (dans l'exemple décrit, un parallélogramme) pour amener la machine (1) dans une position de travail (telle que représentée) ou dans la position de transport (non représentée).

Dans la position de transport, la machine de travail du sol (1) est recentrée par rapport au plan médian du tracteur (2), de telle sorte que l'encombrement global de l'ensemble tracteur (2)-machine (1) soit réduit.

Pour diminuer encore d'avantage l'encombrement latéral de la machine, on peut replier, au transport, l'organe de stabilisation latérale (41) derrière le rotor (16). Pour ce faire, la structure support (42) est liée au châssis (9) par une articulation (30) d'axe dirigé vers le haut.

Le verrouillage de l'organe de stabilisation latérale (41) dans ses positions de travail et dans sa position de transport s'opère en changeant la position de l'axe (31) de la bielle de maintien (32) sur la chape (33) fixée sur le châssis (9), qui comporte, à cet effet, différents trous (22) destinés à recevoir l'axe (31).

Sur la figure 2, on voit de manière plus détaillée le rotor (16) comportant la poutre centrale (20) sur laquelle sont fixés, à des intervalles régulièrement espacés, des flasques (46). Les flasques (46) servent à fixer les outils de travail du sol (21) sur la poutre centrale (20). Cette fixation est réalisée au moyen de quatre boulons (71).

Lesdits flasques (46) sont agencés sur la poutre centrale (20) de telle sorte que chaque outil de travail du sol (21) soit décalé angulairement autour de l'axe longitudinal (18) du rotor (16) par rapport à ses outils de travail du sol (21) adjacents. Les outils de travail du sol (21) sont, comme dit plus haut, constitués chacun d'un disque bombé (47) sur lequel est fixé un groupe de bêches (48). Les bêches (48) correspondantes de deux outils de travail du sol (21) consécutifs génèrent ainsi une hélice (34) en vue d'une pénétration progressive des différents outils de travail du sol (21) dans le sol. Les bêches (48) sont fixées à leur disque bombé (47) correspondant par des vis (50).

Sur la droite de la figure 2, on voit distinctement la disposition de l'organe de stabilisation latérale (41). Celui-ci est, comme dit précédemment, lié à l'extrémité (11) du châssis (9) la plus en arrière par l'intermédiaire de la structure support (42). Cette structure support (42) est, comme dit plus haut, liée à la paroi latérale (13) du châssis (9) par l'intermédiaire d'une articulation (30) d'axe dirigé vers le haut et est maintenue dans une position choisie par l'intermédiaire de la bielle de maintien (32). La structure support (42) comporte un support de stabilisation (420) à l'arrière duquel s'étendent deux barres (54, 55) qui lient le soc (43) audit support de stabilisation (420). La liaison des barres (54, 55) sur le support de stabilisation (420) et sur le soc (43) est réalisée de manière articulée, de telle sorte à créer un quadrilatère (au moins sensiblement un parallélogramme) déformable dans un plan au moins sensiblement vertical. Sur le parallélogramme ainsi créé agit un vérin hydraulique (56) à double effet implanté entre le support de stabilisation (420) et la barre supérieure (55) du parallélogramme. Ce vérin hydraulique (56) est commandé par des éléments de commande hydraulique (560).

La constitution de l'organe de stabilisation latérale (41) décrit ci-avant, permet à l'utilisateur de modifier l'intensité d'action dudit organe de stabilisation latérale (41) et ceci pendant le travail en agissant depuis la cabine de pilotage du tracteur (2) sur les éléments de commande (560) du vérin hydraulique (56).

Les éléments de commande hydraulique (560) peuvent être munis d'un dispositif à déclenchement (non représenté) permettant au soc (43) de se dégager du sol lorsqu'il rencontre un obstacle enfoui dans le sol, tel qu'une roche par exemple.

On voit encore sur la figure 2, au premier plan, les roues de soutènement (36, 38) et leur structure de support respective (35, 39) avec leur organe de réglage (40). Le réglage se fait au moyen d'une manivelle (65) solidaire d'une vis (non représentée) agissant sur un écrou (non représenté) solidaire d'un montant (66) lié à la roue (36, 38) correspondante et qui glisse dans un tube (660) correspondant lié au châssis (9).

Le réglage de la hauteur relative entre le châssis (9) et les roues (36, 38) permet de moduler à volonté la profondeur de travail des outils de travail du sol (21).

La machine qui vient d'être décrite fonctionne de la manière suivante :
Au travail, la machine (1) est attelée à un tracteur (2) qui la tire dans le sens et la direction de travail (3). Simultanément, la prise de force dudit tracteur (2) entraîne en rotation le rotor (16). En tournant, les bêches (48) solidaires des disques (47), arrachent chacune une motte de terre.

Comme l'axe longitudinal (18) du rotor (16) s'étend obliquement par rapport à la direction de travail (3), la bêche (48) imprime à la motte arrachée un mouvement qui est dirigé transversalement à la direction de travail (3). La motte est ensuite reprise par la face concave du disque (47) qui va commencer à la retourner. Du fait de la présence du décrotteur-versoir (57), on assure que la motte soit bien décollée de la face concave du disque (47). Mais, on assure surtout qu'elle soit parfaitement retournée comme désiré. Le décrotteur-versoir (57) parachève, en effet, le retournement de la motte commencé par le disque (47).

Etant donné que la machine est entraînée en rotation positivement par une source motrice, elle est capable de travailler dans des terres très variées. En sus, la qualité du travail fourni est relativement constante.

Selon les travaux à réaliser, on pourra régler la vitesse de rotation du rotor (16), ainsi que la profondeur de travail des outils de travail du sol (21). Le réglage de la vitesse de rotation du rotor (16) sera réalisé en modifiant le régime de sortie du carter de renvoi (24), tandis que la profondeur de travail sera réglée par le mécanisme de réglage (40) des roues de soutènement (36, 38).

Si, au cours du travail, il se produit une déviation latérale de la machine due, par exemple, à un changement local de la configuration du sol, l'utilisateur peut aisément intensifier à volonté l'action de l'organe de stabilisation latérale pour permettre à la machine de retrouver son cap optimal.

## Revendications

1. Machine agricole de travail du sol (1) comportant une structure d'attelage (4), un châssis (9) lié à ladite structure d'attelage (4), un rotor (16) supporté par ledit châssis (9) et dont l'axe longitudinal (18) s'étend obliquement par rapport à la direction d'avance (3) au travail, ledit rotor (16) étant muni d'outils de travail du sol (21) et étant entraîné positivement par une source motrice autour de son axe longitudinal (18), de telle sorte qu'à sa partie frontale les outils de travail du sol (21) se déplacent vers le sol et un organe de stabilisation latérale (41) lié au châssis (9) par une structure porteuse (42), de manière à pouvoir être déplacé en hauteur par rapport audit châssis (9), grâce à un organe de réglage (56), caractérisée par le fait que :
(a) l'organe de stabilisation latérale (41) comporte un soc (43),
(b) la structure porteuse (42) comprend un quadrilatère déformable (54, 55) ayant au moins sensiblement la forme d'un parallélogramme,
(c) l'organe de réglage (56) permettant de déterminer la profondeur de travail du soc (43), est constitué par au moins un vérin hydraulique (56).

2. Machine agricole de travail du sol selon la revendication 1, caractérisée par le fait que le soc (43) est équipé d'un dispositif à déclenchement permettant au soc (43) de se dégager du sol en cas de rencontre avec un obstacle.

3. Machine agricole de travail du sol selon la revendication 2, caractérisée par le fait que le dispositif à déclenchement est intégré dans les éléments de commande (560) liés au vérin hydraulique (56).

4. Machine agricole de travail du sol selon l'une au moins des revendications 1 à 3, caractérisée par le fait que le soc (43) est muni à l'arrière de sa partie inférieure d'une plaque (67) augmentant la portance latérale du soc (43).

5. Machine agricole de travail du sol selon l'une au moins des revendications 1 à 4, caractérisée par le fait que la structure porteuse (42) est liée de façon articulée au châssis (9) par l'intermédiaire d'une articulation (30) d'axe dirigé vers le haut et est maintenue dans une position choisie par rapport au châssis (9) par un organe de maintien réglable (32, 31, 33).

6. Machine agricole de travail du sol selon l'une au moins des revendications 1 à 5, caractérisée par le fait que le soc (43) s'étend dans le voisinage arrière de l'extrémité du rotor (16) la plus en arrière, compte tenu du sens de travail (3).

7. Machine agricole de travail du sol selon la revendication 6, caractérisée par le fait que le soc (43) s'étend dans le sillage de l'outil de travail du sol (21) implanté à ladite extrémité du rotor (16).

8. Machine agricole de travail du sol selon l'une au moins des revendications 1 à 7, caractérisée par le fait que chaque outil de travail du sol (21) présente une concavité dirigée vers l'extrémité du rotor (16) la plus en avant, compte tenu du sens de travail (3) de la machine (1).

## Claims

1. An agricultural machine for working the soil (1) comprising a hitching structure (4), a frame (9) connected to the said hitching structure (4), a rotor (16) supported by the said frame (9) and whose longitudinal axis (18) extends obliquely in relation to the direction of advance (3) during work, the said rotor (16) being equipped with tools for working the soil (21) and being driven positively by a power source about its longitudinal axis (18), in such a way that at its front part the tools for working the soil (21) are displaced towards the ground, and a side stabilisation element (41) connected to the frame (9) by a supporting structure (42), in such a way as to be able to be displaced in height in relation to the said frame (9), thanks to an adjustment element (56), ***characterised in that*****:**
(a) the side stabilisation element (41) has a share (43),
(b) the supporting structure (42) comprises a deformable quadrilateral (54, 55) having at least approximately the shape of a parallelogram,
(c) the adjustment element (56) allowing the determination of the working depth of the share (43) is made up from at least one hydraulic jack (56).

2. An agricultural machine for working the soil in accordance with claim 1, ***characterised in that*** the share (43) is equipped with a release mechanism allowing the share (43) to be released from the soil should it meet with an obstacle.

3. An agricultural machine for working the soil in accordance with claim 2, ***characterised in that*** the release mechanism is integrated into the drive elements (560) connected to the hydraulic jack (56).

4. An agricultural machine for working the soil in accordance with one at least of claims 1 to 3, ***characterised in that*** the share (43) is equipped at the rear of its lower part with a plate (67) increasing the lateral lift of the share (43).

5. An agricultural machine for working the soil in accordance with one at least of claims 1 to 4, ***characterised in that*** the supporting structure (42) is connected in an articulated manner to the frame (9) by means of an articulation (30) whose axis is directed upwardly, and is maintained in a chosen position in relation to the frame (9) by an adjustable holding element (32, 31, 33).

6. An agricultural machine for working the soil in accordance with one at least of claims 1 to 5, ***characterised in that*** the share (43) extends in the vicinity behind the rearmost end of the rotor (16), taking account of the direction of work (3).

7. An agricultural machine for working the soil in accordance with claim 6, ***characterised in that*** the share (43) extends in the wake of the tool for working the soil (21) arranged at the said end of the rotor (16).

8. An agricultural machine for working the soil in accordance with one at least of claims 1 to 7, ***characterised in that*** each tool for working the soil (21) has a concavity directed towards the forwardmost end of the rotor (16), taking account of the direction of work (3) of the machine (1).

## Patentansprüche

1. Landwirtschaftliche Bodenbearbeitungsmaschine (1) bestehend aus einem Anbaugestell (4), einem Rahmen (9), der mit diesem Anbaugestell (4) verbunden ist, einem von diesem Rahmen (9) getragenen Rotor (16), dessen Längsachse (18) sich während der Arbeit schräg zur Fahrtrichtung erstreckt, wobei dieser Rotor (16) mit Bodenbearbeitungswerkzeugen (21) versehen ist und mittels einer Antriebsquelle um seine Längsachse (18) derart positiv angetrieben ist, daß sich die Bodenbearbeitungswerkzeuge (21) an seiner Stirnseite zum Boden hin bewegen, und einem Seitenstabilisationsorgan (41), das derart mit dem Rahmen (9) durch eine Halterung (42) verbunden ist, daß es in der Höhe in bezug auf den Rahmen (9) dank eines Verstellorgans (56) verstellt werden kann, dadurch gekennzeichnet, daß:
(a) das Seitenstabilisationsorgan (41) eine Schar (43) aufweist,
(b) die Halterung (42) ein deformierbares Viereck (54, 55), das zumindest im wesentlichen die Form eines Parallelogramms hat, umfaßt,
(c) das Verstellorgan (56), das die Einstellung der Arbeitstiefe der Schar (43) gestattet, aus zumindest einem Hydraulikzylinder (56) besteht.

2. Landwirtschaftliche Bodenbearbeitungsmaschine nach Anspruch 1, dadurch gekennzeichnet, daß die Schar (43) eine Auslösevorrichtung aufweist, die der Schar (43) gestattet, sich im Fall des Auftreffens auf ein Hindernis aus dem Boden zu befreien.

3. Landwirtschaftliche Bodenbearbeitungsmaschine nach Anspruch 2, dadurch gekennzeichnet, daß die Auslösevorrichtung in den Steuerelementen (560) integriert ist, die mit dem Hydraulikzylinder (56) verbunden sind.

4. Landwirtschaftliche Bodenbearbeitungsmaschine nach mindestens einem der Ansprüche 1 bis 3, dadurch gekennzeichnet, daß die Schar (43) hinten an ihrem unteren Teil mit einer Platte (67) versehen ist, die die Seitenabstützung der Schar (43) erhöht.

5. Landwirtschaftliche Bodenbearbeitungsmaschine nach mindestens einem der Ansprüche 1 bis 4, dadurch gekennzeichnet, daß die Halterung (42) gelenkig mit dem Rahmen (9) mittels eines Gelenks (30) mit nach oben gerichteter Achse verbunden ist und in einer in bezug auf den Rahmen (9) ausgewählten Lage durch ein verstellbares Halteorgan (32, 31, 33) gehalten ist.

6. Landwirtschaftliche Bodenbearbeitungsmaschine nach mindestens einem der Ansprüche 1 bis 5, dadurch gekennzeichnet, daß die Schar (43) sich nahe hinter dem, bezogen auf die Arbeitsrichtung (3), hintersten Ende des Rotors (16) erstreckt.

7. Landwirtschaftliche Bodenbearbeitungsmaschine nach Anspruch 6, dadurch gekennzeichnet, daß die Schar (43) sich in der Bahn des Bodenbearbeitungswerkzeugs (21), das an diesem Ende des Rotors (16) angeordnet ist, erstreckt.

8. Landwirtschaftliche Bodenbearbeitungsmaschine nach mindestens einem der Ansprüche 1 bis 7, dadurch gekennzeichnet, daß jedes Bodenbearbeitungswerkzeug (21) eine Konkavität, die, bezogen auf die Arbeitsrichtung (3) der Maschine (1), zum vordersten Ende des Rotors (16) hin gerichtet ist, aufweist.
